# EUROPEAN PATENT SPECIFICATION

(11) **EP 1 932 690 B1**
(45) Date of publication and mention of the grant of the patent: **02.12.2009**
(21) Application number: 06126016.2
(22) Date of filing: 13.12.2006
(51) Int. Cl.: B60D 1/14, B62D 25/20

(54) **Draw beam suspension**
Zugstangenaufhängung
Suspension de poutre de traction

(43) Date of publication of application: 18.06.2008
(73) Proprietor: VBG Group AB (Publ), 462 28 Vänersborg (SE)
(72) Inventor: Johansson, Stefan, 462 53 Vänersborg (SE)
(74) Representative: Edlund, Fabian

(56) References cited:
- EP-A- 0 800 936
- EP-A1- 0 950 551
- DE-U1- 29 616 145
- DE-U1-202004 005 981
- DE-U1-202004 012 190

## Description

### Technical field

The present invention relates to a draw beam suspension for attaching a draw beam to longitudinal frame members of a towing vehicle. In particular the present invention relates to a design of a draw beam suspension that enables the constituent parts to be held together using fasteners arranged in through holes, such as bolt connections.

### Background of the invention

When manufacturing commercial vehicles, such as lorries, it is today common to offer various kinds of towing or draw arrangements, allowing a trailer to be connected to the vehicle. Coupling arrangements of the kind stated above generally comprise a draw beam, attached to the vehicle, and a coupling device supported by said draw beam, for example, in the form of a towing pin arranged between two horizontal plates.

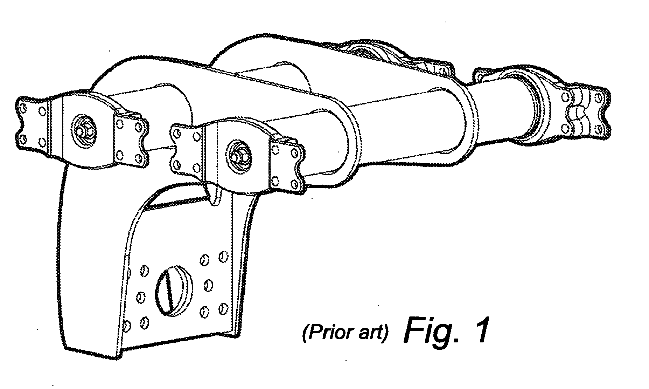

Often the draw beam is attached directly to the longitudinal frame members. However, in some situations a more sophisticated draw beam suspension is required to achieve a suitable position of the draw beam. An example is the generic suspension VBG ® DBI-150 (shown in Fig. 1), which is especially adapted for driving with bulk centre-axle trailers. It comprises two tubular members extending between the longitudinal frame members of the vehicle, and two side plates extending between the tubular members. The draw beam is mounted between the side plates.

The constituent parts of the draw beam suspension (i.e. the tubular members and side plates) are typically assembled by welding before delivery to the vehicle assembly plant, where the draw beam suspension is mounted to the vehicle. However, from a manufacturing and logistics perspective it would be beneficial to postpone the assembly of the draw beam suspension, and deliver the constituent parts unassembled to the vehicle assembly plant. Yet, in order for the manufacturer to be able to guarantee the strength of the draw beam suspension while it is assembled at the vehicle assembly plant, the use of fasteners arranged in through holes (such as bolt connections), rather than welding, is required to hold the constituent parts together.

Using bolt connection in draw beam arrangements are known in the art. An example of a bolted draw beam arrangement for a vehicle is disclosed in WO 01/76896. The draw beam here is arranged between the frame beams of the vehicle using connecting elements that allow adjustment of the draw beam in the longitudinal direction. Another example of a bolted draw beam arrangement is disclosed in EP 800 936 . Here the draw beam is attached to the longitudinal frame members of the vehicle using two side plates, bolted to the draw beam.

Looking at the constructions in WO 01/76896 and EP 800 936, proper contact surfaces are provided between the constituent parts, thereby enabling bolt connection. However, an attempt to apply the principles disclosed in the prior art documents to the construction in Fig. 1 tends to fail. Even if the supporting beams with circular cross sections are replaced with supporting beams having flat sides in order to achieve contact surfaces resembling the ones in WO 01/76896 and EP 800 936, the bolted joints will provide insufficient strength to handle the stress arising with a heavy vehicle in traffic, unless over dimensioning the constituent parts. Thus, the problem to design a properly dimensioned draw beam suspension enabling the use of fasteners arranged in through holes, such as bolt connection, remains.

### Summary of the invention

In view of the above, an object of the invention is to solve or at least reduce the problems discussed above. In particular, an object is to provide a draw beam suspension which can be held together using fasteners arranged in through holes, such as bolt connections.

According to a first aspect of the invention, the draw beam suspension comprises: two supporting beams extending between the longitudinal frame members; two bridging beams extending between the supporting beams; and two side plates for attaching the draw beam to the bridging beams. Each supporting beam has a first and a second longitudinal flange and has an open cross-section defining an opening, wherein the supporting beams are arranged with their openings facing each other. Further, each bridging beam has a web and a longitudinal flange, wherein end-portions of the web are bent to form end-flanges essentially perpendicular to the web. The longitudinal flange of each bridging beam abuts the first longitudinal flange of each supporting beam, and the end-flanges of each bridging beam abut the second longitudinal flanges of the supporting beams. The end-flanges and the longitudinal flanges are provided with through holes enabling the bridging beams and the supporting beams to be held together by fasteners arranged in the through holes.

By using supporting beams with open cross-sections arranged to face each other, the area of the total contact surface for each supporting beam/bridging beam can be increased, so that a sufficiently strong connection can be achieved using fasteners in through holes.

Through the design according to the present invention, a relatively light but yet strong construction is achieved, that provides large enough contact surfaces between the constituent parts to enable, for example, bolt connections that withstands the stress that may arise. More specifically, this design results in at least two contact surfaces between each bridging beam and each supporting beam. Thus, more fasteners may be used resulting in enhanced distribution of arising stress and increased strength. The invention also allows other fasteners than bolts, such as screws and rivets to be used. The possibility to use screw connections offers the advantage that it is relatively simple to disassemble. A further advantage of the draw beam suspension is that it has a modular structure, where standardized parts may be used and the constituent parts can be replaced to adapt the draw beam suspension to various models (e.g. spacing between longitudinal frame members of the vehicle, the fixation points, and hole patterns of these frame members), enabling further standardization, and thus lower manufacturing costs.

The end-portions of at least one of the longitudinal flanges of the supporting beams are preferably bent to form end-flanges essentially perpendicular to the at least one longitudinal flange. These end-flanges may also be provided with through holes for attachment of the supporting beam to the longitudinal frame members of the vehicle by fasteners arranged in the through holes. An advantage with a design using supporting beams with open cross-section and this type of end-flanges for fixation is that it covers only the "active" holes, i.e. the holes that are used for fixation of the draw beam suspension. Also, the integrated end-flanges reduce the number of parts and number of joints needed, thereby reducing the production and assembly costs.

According to one embodiment of the invention, the end-flanges of the first and second longitudinal flanges of the supporting beam are shaped to prevent overlapping as adjacent end-flanges are bent toward the opening. This enables end-flanges also for embodiments where both end-flanges are bent toward the opening. The option where the end-flanges of the supporting beams can be bent inward or outward as preferred, further increases the adaptation to fixation points for various vehicle models.

Each side plate can extend downward from the bridging beam, in a direction perpendicular to a plane defined by the supporting beams and bridging beams, thereby enabling a vertical offset of said draw beam relative said longitudinal frame members of the towing vehicle. This enables the draw beam to be located in a position in which it can better handle the applied pulling forces.

The first longitudinal flange of the supporting beam can be essentially perpendicular to the second longitudinal flange of the supporting beam. Similarly, the longitudinal flange of the bridging beam can be essentially perpendicular to the web. More specifically, the cross-section of at least one of the supporting beams and/or bridging beams can have a profile belonging to the group consisting of L-profile, U-profile, T-profile and I-profile. This allow use of standard components, reducing production costs.

The side plates preferably have through holes enabling connection of the side plates to the draw beam and/or the bridging beams by fasteners arranged in the through holes.

According to another embodiment of the invention, the side plates are integrated with said bridging beams. This may offer a more robust design and reduced assemblage costs.

Other objectives, features and advantages will appear from the following detailed disclosure, from the attached dependent claims as well as from the drawings.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements.
Figure 1 is a prior art draw beam suspension.
Figure 2 is a schematic perspective view of a towing vehicle equipped with a draw beam suspension according to an embodiment of the present invention.
Figure 3 is an exploded view of the draw beam suspension in figure 2.
Figure 4-9 are exploded views of draw beam suspensions according to alternative embodiments of the present invention.

### Detailed description of preferred embodiments

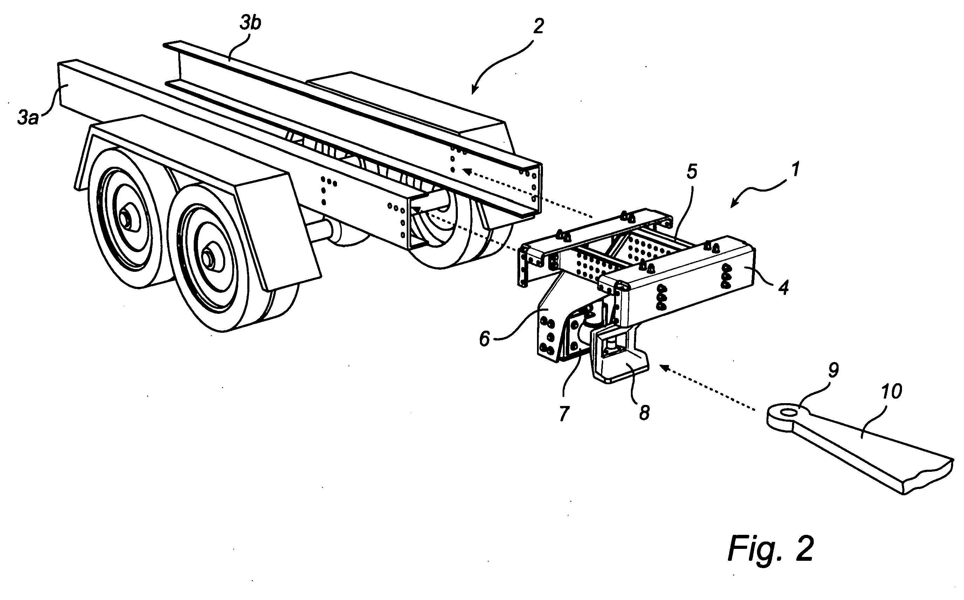

Fig. 2 illustrates a perspective view of a coupling arrangement. A draw beam suspension 1 according to an embodiment of the invention is arranged on a towing vehicle 2 having two longitudinal frame members 3a, 3b provided in the longitudinal direction of the vehicle. The draw beam suspension 1 comprises supporting beams 4 extending between the frame members 3a, 3b, bridging beams 5 extending between the supporting beams 4, and side plates 6 attached to the bridging beams 5. The side plates 6 support a draw beam 7 that may support a coupling device 8, preferably in the form of a towing pin arranged between two horizontal plates. Here, the coupling device 8 is adapted to receive a drawbar eye 9 of a drawbar 10 fitted to a trailer (not shown). As a result, the trailer can be connected to the towing vehicle.

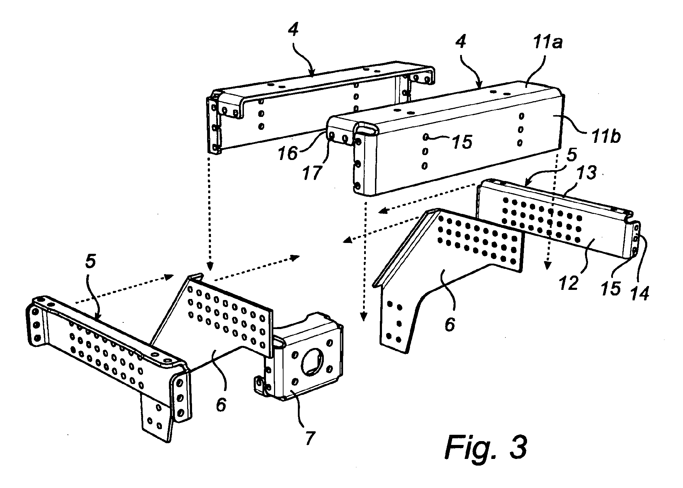

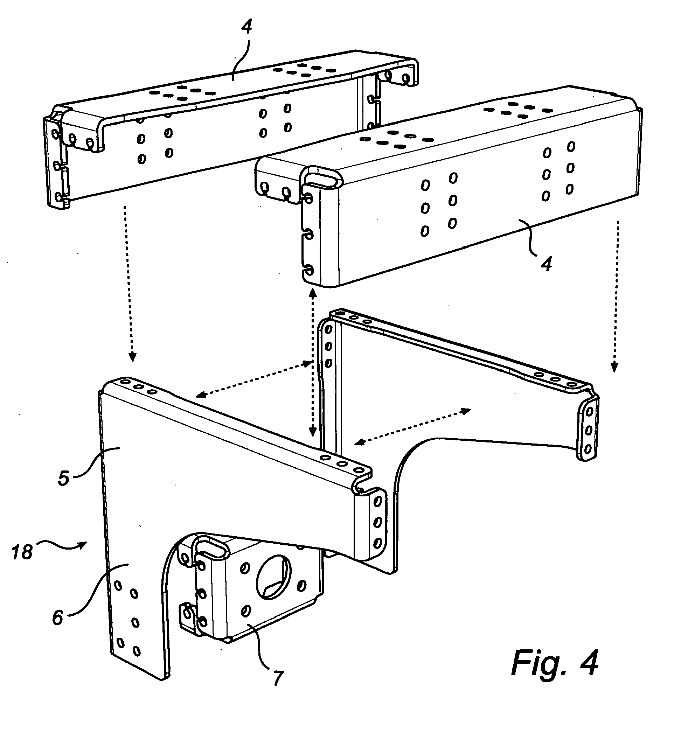

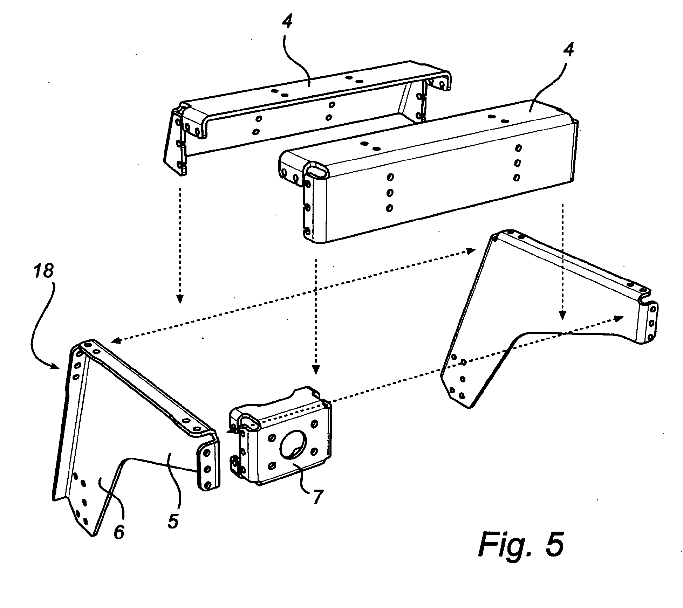

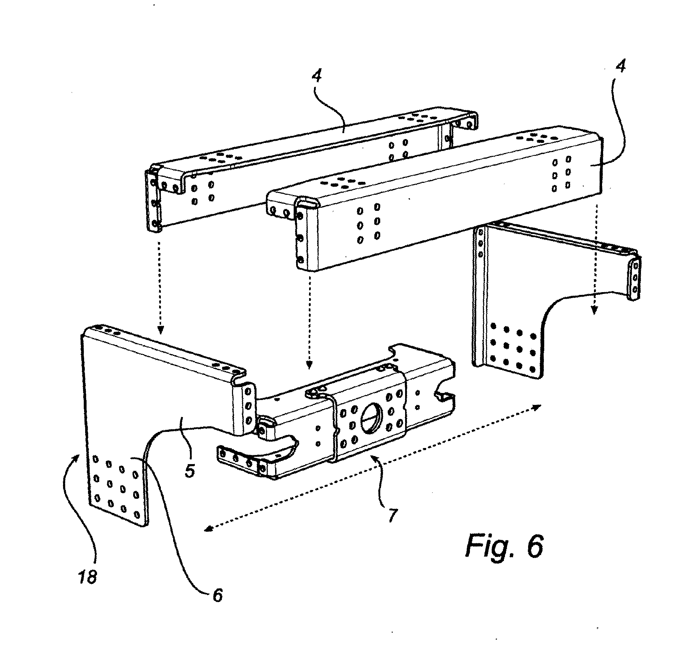

The constituent parts of the draw beam suspension 1 in figure 2 will be described in further detail with reference to figure 3. Further embodiments will be briefly described with reference to figures 4-9.

The supporting beams 4 have open cross-section, and are arranged so that the openings defined by these cross sections face each other. In the illustrated case, the supporting beams 4 are L-profile beams with two longitudinal flanges 11a, 11b, but other cross sections are possible, such as T-profiles, U-profiles, etc.

Each bridging beam 5 has a web 12 and a longitudinal flange 13. In the illustrated case, the bridging beams are also L-profile beams, where one side of the L constitutes the web 12 and the other side constitutes the flange 13. The end-portions of the web 12 can be bent to form end-flanges 14, essentially perpendicular to the web 12.

The longitudinal flange 13 of each bridging beam 5 abuts the first longitudinal flange 11a of each supporting beam. Further, the end-flanges 14 abut the second longitudinal flange 11b of each supporting beam.

The end-flanges 14 and longitudinal flanges 13 of the bridging beams 5 as well as the longitudinal flanges 11a, 11b of the supporting beams 4 can be provided with through holes 15, so that the bridging beams 5 may be connected to the supporting beams 4 by fasteners, such as, bolts, screws, or rivets.

The longitudinal flange 13 of each bridging beam 5 can extend on the outer side of the web 12, as shown in figure 3, or extend on the inner side of the web 12, as shown e.g. in figure 4. The bridging beams may alternatively be T-profile beams, in which case it may have a first longitudinal flange extending on the inner side of the web, and a second longitudinal flange extending on the outer side of the web.

The end-flanges 14 may be bent outwards from the web 12, as illustrated in figure 3, or inwards as illustrated e.g. in figure 4. The end-flanges 14 may extend over the entire width of the longitudinal flange 11b of each supporting beam 4, or extend over only a portion of the width of the longitudinal flange 11b.

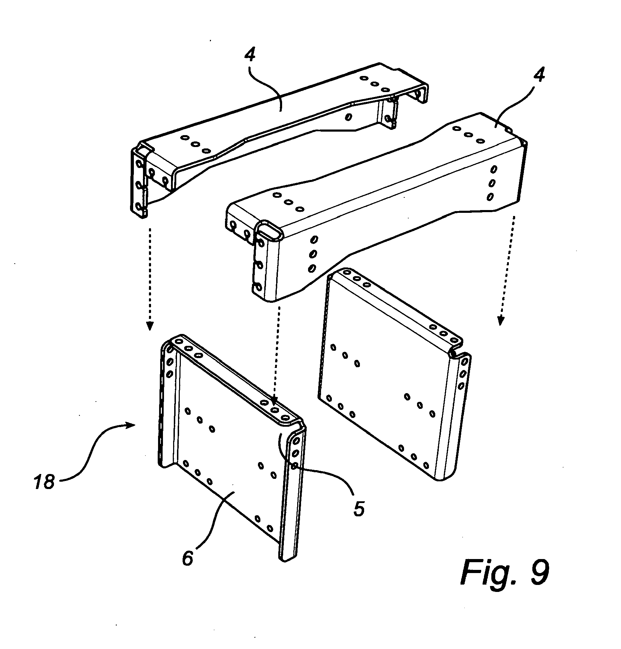

Returning to figure 3, the side plates 6 extend downward from the bridging beams 5, in a direction perpendicular to a plane defined by the supporting beams and bridging beams. The side plates 6 can have an asymmetrical shape such as the arched shape illustrated in figure 3, or may simply be rectangular, as in figure 9. In some implementations, it may be advantageous to integrate the side plates 6 and the bridging beams 5 into integral elements 18, as illustrated in figures 4-9.

The side plates 6 (or integral elements 18) each can have holes for attaching a draw beam 7 between the plates using fasteners, such as, bolts, screws, or rivets.

Further, as illustrated in figure 3, the end-portions of the longitudinal flanges 11a, 11b of each supporting beam 4 can be bent to form end-flanges 16 essentially perpendicular to the longitudinal flanges 11a, 11b. These end-flanges 16 can be provided with through holes 17, for attaching the supporting beams 4 to the longitudinal frame members 3a, 3b of the towing vehicle 2.

In figure 3, the end-flanges 16 of each flange 11a, 11b are both bent toward the opening of the beam cross-section. The adjacent end-flanges 16 can be shaped to avoid overlapping, for example, by reducing the width of the end-flanges so that they do not reach all the way to the middle of the L-profile.

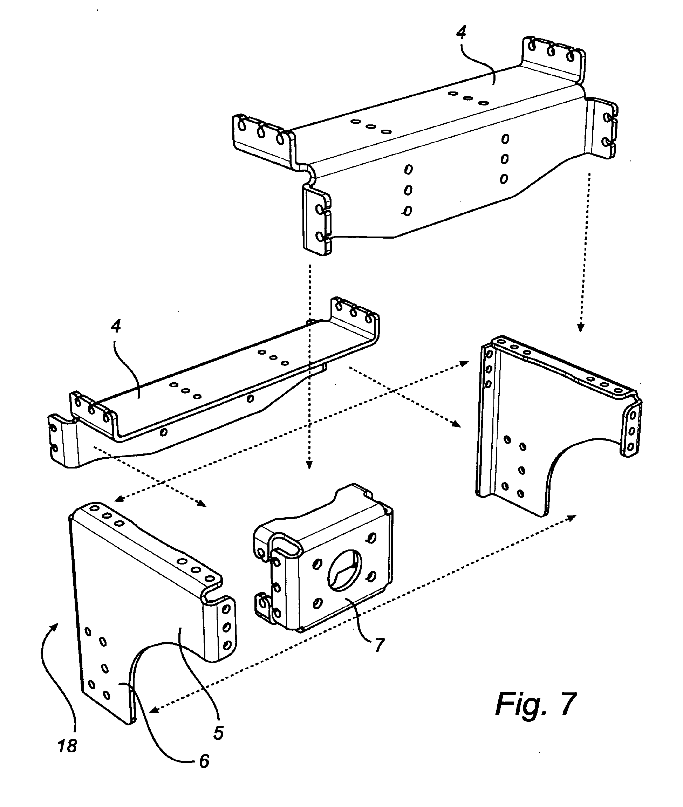

The end-flanges 16 can alternatively both be bent outwards (as illustrated in figure 7), or one can be bent outward and the other one inward.

In order to adapt the draw beam suspension 1 to a specific vehicle, individual parts of the suspension can be replaced without replacing the entire suspension. For instance, the supporting beams 4 may be replaced so that the draw beam suspension 1 fits the spacing between the longitudinal frame members 3a, 3b of the vehicle. Furthermore, as various vehicle models may have different fixation points, the bridging beams 5 may be replaced to alter the distance between the supporting beams 4. To adapt to the hole patterns of the vehicle longitudinal frame members 3a, 3b, a supporting beam 4 may be replaced with one having end-flanges 16 with appropriate hole pattern, and with the end-flanges 16 being bent inward or outward as required. Also, the distance between the bridging beams 5 may be altered to fit draw beams 7 of different lengths by providing a supporting beam 4 with multiple hole patterns.

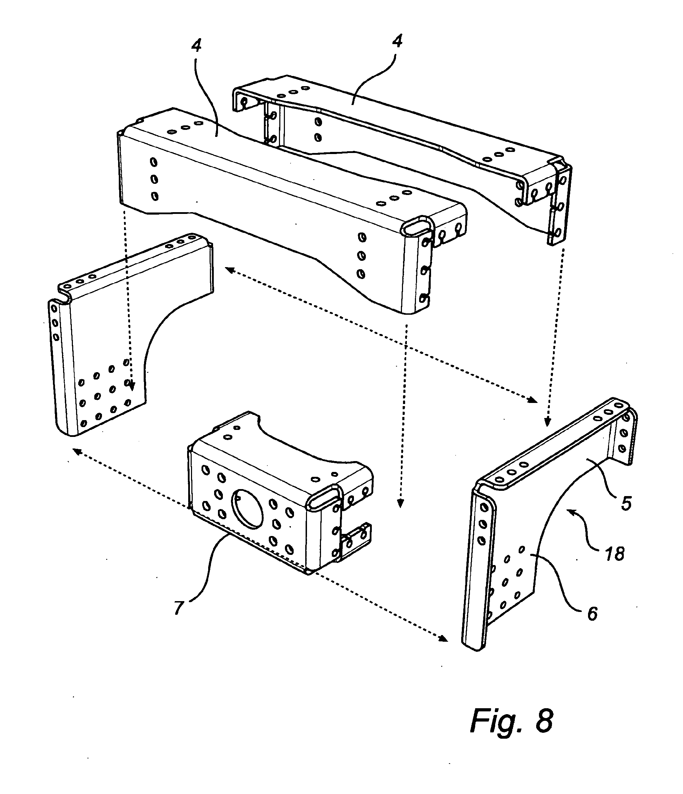

In order to arrange the draw beam 7 in the position most appropriate for the intended towing vehicle and trailer, the side plates 6 may be adapted in a number of ways. Vertical adaptation of the draw beam position may be achieved by varying the vertical extension of the side plates 6, whereas adaptation in the vehicle longitudinal direction may be achieved through the positioning of the side plates 6 in relation to the bridging beams 5 and through the side plate design. Thus, the position of the draw beam 7 can be shifted, for example, closer to the rear wheel axis of the vehicle (as in figure 3-7), or further away from it (as in figure 8). Using side plates 6 having multiple hole patterns (as exemplified in figure 9) enables selection of the longitudinal offset of the draw beam 7 during assemblage.

The invention has mainly been described above with reference to a few embodiments. However, as is readily appreciated by a person skilled in the art, other embodiments than the ones disclosed above are equally possible within the scope of the invention, as defined by the appended patent claims. For instance the L-beams described could be replaced with another beam having an open cross-section, such as, a U-beam, T-beam ,or an I-beam. The joints described as bolt connections could comprise bolts, screws, or rivets.

## Claims

1. A draw beam suspension (1) for attaching a draw beam (7) to longitudinal frame members (3a, 3b) of a towing vehicle (2), said draw beam suspension(1) comprising:
two supporting beams (4) extending between said longitudinal frame members (3a, 3b); two bridging beams(5) extending between said supporting beams (4); and two side plates (6) for attaching said draw beam (7) to said bridging beams (5),
**characterized in that**;
each supporting beam (4) has a first and a second longitudinal flange (11a, 11b) and has an open cross-section defining an opening, wherein said supporting beams (4) are arranged with their openings facing each other; and
each bridging beam (5) has a web (12) and a longitudinal flange (13), wherein end-portions of said web (12) are bent to form end-flanges (14) essentially perpendicular to said web (12);
wherein the longitudinal flange (13) of each bridging beam (5) abuts said first longitudinal flange (11a) of each supporting beam (4), and the end-flanges (14) of each bridging beam (5) abut said second longitudinal flanges (11b) of the supporting beams (4);
the end-flanges (14) and the longitudinal flanges (11a, 11b, 13) are provided with through holes (15) enabling the bridging beams (5) and the supporting beams (4) to be held together by fasteners arranged in said through holes (15).

2. The suspension according to claim 1, wherein end-portions of at least one of said longitudinal flanges (11a, 11b) of each supporting beams (4) are bent to form end-flanges (16) essentially perpendicular to said at least one longitudinal flange (11a, 11b) of said supporting beam (4).

3. The suspension according to claim 1 or 2, wherein said first longitudinal flange (11a) of the supporting beam (4) being essentially perpendicular to said second longitudinal flange (11b) of the supporting beam (4).

4. The suspension according to any one of the above claims, wherein said longitudinal flange (13) of the bridging beam (5) is essentially perpendicular to said web (12).

5. The suspension according to any one of the above claims, wherein the end-flanges (16) of the first and second longitudinal flanges (11a, 11b) of the supporting beam (4) are shaped to prevent overlapping as adjacent end-flanges (16) are bent toward the opening.

6. The suspension according to any one of the above claims, wherein each side plate (6) extends downward from the bridging beam (5), in a direction perpendicular to a plane defined by the supporting beams (4) and bridging beams (5), thereby enabling a vertical offset of said draw beam (7) relative said longitudinal frame members (3a, 3b) of the towing vehicle (2).

7. The suspension according to any one of the above claims, wherein said side plates (6) have through holes enabling said side plates (6) and said draw beam (7) to be held together by fasteners arranged in said through holes.

8. The suspension according to any one of the above claims, wherein said side plates (6) have through holes enabling said side plates (6) and said bridging beams (5) to be held together by fasteners arranged in said through holes.

9. The suspension according to any one of claim 1-7, wherein said side plates (6) are integrated with said bridging beams (5).

10. The suspension according to any one of the above claims, wherein the cross-section of at least one of said supporting beams (4) has a profile belonging to the group consisting of L-profile, U-profile, T-profile and I-profile.

11. The suspension according to any of the above claims, wherein the cross-section of at least one of said bridging beams (5) has a profile belonging to the group consisting of L-profile, U-profile, T-profile and I-profile.

12. The suspension according to any one of claims 2-11, wherein said end-flanges (16) of the supporting beam (4) have through holes enabling said supporting beam (4) to be attached to said longitudinal frame members (3a, 3b) by fasteners arranged in said through holes.

## Patentansprüche

1. Zugtraversenaufhängung (1) zum Befestigen einer Zugtraverse (7) an Rahmenlängsträgern (3a, 3b) eines Zugfahrzeugs (2), wobei die Zugtraversenaufhängung (1) Folgendes umfasst:
zwei Stützprofile (4), die sich zwischen den Rahmenlängsträgern (3a, 3b) erstrecken; zwei Brückenprofile (5), die sich zwischen den Stützprofilen (4) erstrecken; und zwei Seitenplatten (6) zum Befestigen der Zugtraverse (7) an den Brückenprofilen (5), **dadurch gekennzeichnet, dass:**
jedes Stützprofil (4) einen ersten und einen zweiten Längsflansch (11a, 11 b) aufweist und einen offenen Querschnitt aufweist, der eine Öffnung definiert, wobei die Stützprofile (4) so angeordnet sind, dass ihre Öffnungen einander zugewandt sind; und
jedes Brückenprofil (5) einen Steg (12) und einen Längsflansch (13) aufweist, wobei Endabschnitte des Steges (12) zu Endflanschen (14) gebogen sind, die im Wesentlichen senkrecht zu dem Steg (12) verlaufen;
wobei der Längsflansch (13) jedes Brückenprofils (5) an dem ersten Längsflansch (11a) jedes Stützprofils (4) anliegt und die Endflansche (14) jedes Brückenprofils (5) an den zweiten Längsflanschen (11b) der Stützprofile (4) anliegen;
die Endflansche (14) und die Längsflansche (11a, 11b, 13) mit Durchgangslöchern (15) versehen sind, die es ermöglichen, dass die Brückenprofile (5) und die Stützprofile (4) durch in den Durchgangslöchern (15) angeordnete Befestigungsmittel zusammengehalten werden.

2. Aufhängung nach Anspruch 1, wobei Endabschnitte von mindestens einem der Längsflansche (11a, 11b) jedes Stützprofils (4) zu Endflanschen (16) gebogen sind, die im Wesentlichen senkrecht zu dem mindestens einen Längsflansch (11a, 11b) des Stützprofils (4) verlaufen.

3. Aufhängung nach Anspruch 1 oder 2, wobei der erste Längsflansch (11a) des Stützprofils (4) im Wesentlichen senkrecht zu dem zweiten Längsflansch (11b) des Stützprofils (4) verläuft.

4. Aufhängung nach einem der vorangehenden Ansprüche, wobei der Längsflansch (13) des Brückenprofils (5) im Wesentlichen senkrecht zu dem Steg (12) verläuft.

5. Aufhängung nach einem der vorangehenden Ansprüche, wobei die Endflansche (16) des ersten und des zweiten Längsflansches (11a, 11 b) des Stützprofils (4) so geformt sind, dass ein Überlappen verhindert wird, wenn benachbarte Endflansche (16) in Richtung der Öffnung gebogen werden.

6. Aufhängung nach einem der vorangehenden Ansprüche, wobei sich jede Seitenplatte (6) von dem Brückenprofil (5) abwärts in einer Richtung senkrecht zu einer Ebene erstreckt, die durch die Stützprofile (4) und die Brückenprofile (5) definiert wird, wodurch ein vertikaler Versatz der Zugtraverse (7) relativ zu den Rahmenlängsträgern (3a, 3b) des Zugfahrzeugs (2) ermöglicht wird.

7. Aufhängung nach einem der vorangehenden Ansprüche, wobei die Seitenplatten (6) Durchgangslöcher aufweisen, die es ermöglichen, dass die Seitenplatten (6) und die Zugtraverse (7) durch in den Durchgangslöchern angeordnete Befestigungsmittel zusammengehalten werden.

8. Aufhängung nach einem der vorangehenden Ansprüche, wobei die Seitenplatten (6) Durchgangslöcher aufweisen, die es ermöglichen, dass die Seitenplatten (6) und die Brückenprofile (5) durch in den Durchgangslöchern angeordnete Befestigungsmittel zusammengehalten werden.

9. Aufhängung nach einem der Ansprüche 1-7, wobei die Seitenplatten (6) mit den Brückenprofilen (5) integriert sind.

10. Aufhängung nach einem der vorangehenden Ansprüche, wobei der Querschnitt von mindestens einem der Stützprofile (4) ein Profil aufweist, das zu der Gruppe gehört, die aus einem L-Profil, einem U-Profil, einem T-Profil und einem I-Profil besteht.

11. Aufhängung nach einem der vorangehenden Ansprüche, wobei der Querschnitt von mindestens einem der Brückenprofile (5) ein Profil aufweist, das zu der Gruppe gehört, die aus einem L-Profil, einem U-Profil, einem T-Profil und einem I-Profil besteht.

12. Aufhängung nach einem der Ansprüche 2-11, wobei die Endflansche (16) des Stützprofils (4) Durchgangslöcher aufweisen, die es ermöglichen, das Stützprofil (4) durch in den Durchgangslöchern angeordnete Befestigungsmittel an den Rahmenlängsträgern (3a, 3b) anzubringen.

## Revendications

1. Suspension de poutre de traction (1) pour rattacher une poutre de traction (7) à des éléments de châssis longitudinaux (3a,3b) d'un véhicule de remorquage (2), ladite suspension de poutre de traction (1) comprenant :
deux poutres de support (4) s'étendant entre lesdits éléments de châssis longitudinaux (3a ;3b) ; deux poutres traversières (5) s'étendant entre lesdites poutres de support (4) ; et deux plaques latérales (6) pour rattacher ladite poutre de traction (7) auxdites poutres traversières (5),
**caractérisée en ce que**
chaque poutre de support (4) comporte une première et une seconde bride longitudinale (11a,11b) et possède une section transversale ouverte définissant une ouverture, dans laquelle lesdites poutres de support (4) sont agencées avec leurs ouvertures se faisant face l'une l'autre ; et
chaque poutre traversière (5) possède une toile (12) et une bride longitudinale (13), dans laquelle des portions d'extrémité de ladite toile (12) sont cintrées afin de former des brides d'extrémité (14) essentiellement perpendiculaires à ladite toile (12) ;
dans laquelle la bride longitudinale (13) de chaque poutre traversière (5) bute contre ladite première bride longitudinale (11a) de chaque poutre de support (4), et les brides d'extrémité (14) de chaque poutre traversière (5) butent contre lesdites secondes brides longitudinales (11 b) des poutres de support (4) ;
les brides d'extrémité (14) et les brides longitudinales (11a,11b,13) sont pourvues d'alésages traversants (15) permettant de maintenir solidarisées les poutres traversières (5) et les poutres de support (4) par des éléments de fixation disposés dans lesdits alésages traversants (15).

2. Suspension selon la revendication 1, dans laquelle des portions d'extrémité d'au moins une desdites brides longitudinales (11a,11 b) de chaque poutre de support (4) sont cintrées afin de former des brides d'extrémité (16) essentiellement perpendiculaires à ladite au moins une bride longitudinale (11a,11b) de ladite poutre de support (4).

3. Suspension selon la revendication 1 ou 2, dans laquelle ladite première bride longitudinale (11a) de la poutre de support (4) est essentiellement perpendiculaire à ladite seconde bride longitudinale (11b) de la poutre de support (4).

4. Suspension selon une quelconque des revendications ci-dessus, dans laquelle ladite bride longitudinale (13) de la poutre traversière (5) est essentiellement perpendiculaire à ladite toile (12).

5. Suspension selon une quelconque des revendications ci-dessus, dans laquelle les brides d'extrémité (16) de la première et la seconde bride longitudinale (11a,11b) de la poutre de support (4) sont façonnées afin d'empêcher une superposition lorsque des brides d'extrémité adjacentes (16) sont cintrées dans la direction de l'ouverture.

6. Suspension selon une quelconque des revendications ci-dessus, dans laquelle chaque plaque latérale (6) s'étend vers le bas à partir de la poutre traversière (5), dans une direction perpendiculaire à un plan défini par les poutres de support (4) et les poutres traversières (5), en permettant ainsi un décalage vertical de ladite poutre de traction (7) par rapport auxdits éléments de châssis longitudinaux (3a,3b) du véhicule de traction (2).

7. Suspension selon une quelconque des revendications ci-dessus, dans laquelle lesdites plaques latérales (6) possèdent des alésages traversants permettant de maintenir solidarisées lesdites plaques latérales (6) et ladite poutre de traction (7) par des éléments de fixation disposés dans lesdits alésages traversants.

8. Suspension selon une quelconque des revendications ci-dessus, dans laquelle lesdites plaques latérales (6) possèdent des alésages traversants permettant de maintenir solidarisées lesdites plaques latérales (6) et lesdites poutres traversières (5) par des éléments de fixation disposés dans lesdits alésages traversants.

9. Suspension selon une quelconque des revendications 1 à 7, dans laquelle lesdites plaques latérales (6) sont intégrées en un seul tenant auxdites poutres traversières (5).

10. Suspension selon une quelconque des revendications ci-dessus, dans laquelle la section transversale d'au moins une desdites poutres de support (4) possède un profilé appartenant au groupe consistant en profilés en L, profilés en U, profilés en T et profilés en I.

11. Suspension selon une quelconque des revendications précédentes, dans laquelle la section transversale d'au moins une desdites poutres traversières (5) possède un profilé appartenant au groupe consistant en profilés en L, profilés en U, profilés en T et profilés en I.

12. Suspension selon une quelconque des revendications 2 à 11, dans laquelle lesdites brides d'extrémité (16) de la poutre de support (4) possèdent des alésages traversants permettant de rattacher ladite poutre de support (4) auxdits éléments de châssis longitudinaux (3a,3b) par des éléments de fixation disposés dans lesdits alésages traversants.
